# EUROPÄISCHE PATENTSCHRIFT

(11) **EP 1 654 105 B1**
(45) Veröffentlichungstag und Bekanntmachung des Hinweises auf die Patenterteilung: **17.11.2010**
(21) Anmeldenummer: 04764069.3
(22) Anmeldetag: 13.08.2004
(51) Int. Cl.: B29C 45/27, B29C 45/28

(54) **Spritzgiesswerkzeug**
Injection moulding mould
Moule d'injection

(30) Priorität: 13.08.2003 NL 1024099
(43) Veröffentlichungstag der Anmeldung: 10.05.2006
(60) Teilanmeldung: 09012007.2
(73) Patentinhaber: Günther Heisskanaltechnik GmbH, 35066 Frankenberg/Eder (DE)
(72) Erfinder: GÜNTHER, Herbert, 35108 Allendorf (DE); VAN LIESHOUT, Johannes, Petrus, NL-5683 LT Best (NL)
(74) Vertreter: Buchhold, Jürgen
(86) Internationale Anmeldenummer: PCT/EP2004/009072
(87) Internationale Veröffentlichungsnummer: WO 2005/018906

(56) Entgegenhaltungen:
- EP-A- 1 375 107
- WO-A-98/12038
- WO-A-03/070446
- WO-A-2004/073954
- GB-A- 1 271 543
- GB-A- 1 348 276
- US-A- 3 553 788
- US-A- 4 043 740
- US-A- 5 098 280
- US-A- 5 804 228
- US-A1- 2004 146 598
- PATENT ABSTRACTS OF JAPAN Bd. 2003, Nr. 05, 12. Mai 2003 (2003-05-12) -& JP 2003 011176 A (MITSUBISHI MATERIALS CORP), 15. Januar 2003 (2003-01-15)

## Beschreibung

Die Erfindung betrifft eine Spritzgießdüse zur Verwendung in einem Spritzgießwerkzeug gemäß dem Oberbegriff von Anspruch 1.

Um ein fließfähiges Material, insbesondere eine Schmelze, einem trennbaren Werkzeugblock (Formeinsatz) zuzuführen, benutzt man gewöhnlich Spritzgießdüsen, insbesondere Heiß- oder Kaltkanaldüsen. Diese haben meist einen temperierten Düsenkörper, in dem ein Strömung- bzw. Schmelzekanal ausgebildete ist, der an oder in einem Düsenmundstück mündet und mit einer von dem Formeinsalz gebildeten Formkavität des Spritzgießwerkzeugs strömungsverbunden ist. Damit die Schmelze bis an den Formeinsatz heran auf einer gleichmäßigen Temperatur gehalten wird, besteht das von unten fest in den Düsenkörper eingebrachte Düsenmundstück aus einem hoch wärmeleitenden Material. Zwischen der Spritzgießdüse und dem Werkzeug ist zur thermischen Trennung ein Luftspalt ausgebildet.

Von Nachteil hierbei ist, daß der Verschleiß am Düsenmundstück relativ hoch sein kann, insbesondere bei der Verarbeitung von Werkstoffen, die mit abrasiven Bestandteilen gefüllt sind. Folglich müssen die Düsenmundstücke in regelmäßigen Abständen ausgewechselt werden, was bei herkömmlichen Düsen entsprechend zeitaufwendig ist.

US 5 804 228 A sieht daher eine Spritzgießdüse vor, in deren Gehäuse ein Heißkanal für eine zu verarbeitende Schmelze ausgebildet ist. In das Ende des Heißkanals ist ein Düsenmundstück einschiebbar, das optional mit Hilfe einer bewegbaren Spindel verschlossen werden kann. Eine andere Ausführungsform sieht einen offenen Anguss mit einer Düsenspitze anstelle der Verschlussspindel vor. In dem Düsenmundstück wird der Schmelzekanal fortgesetzt, es ist daher hohen Belastungen durch aggressives Material ausgesetzt. US 5 804 228 A sieht ferner vor, dass das Düsenmundstück in den Düsenkörper eingeschoben wird, sich mit Hilfe eines Absatzes am Formnest oder an einer Stützbuchse abstützt und dadurch festgeklemmt wird.

US 5 804 228 A sieht vor, dass sich das Düsenmundstück mit Hilfe seines als Einsatz ausgebildeten Endes auf einer Stützbuchse abstützt und dadurch justiert wird. So wird erreicht, dass das Düsenmundstück in der Richtung die parallel zum Schmelzekanal verläuft, positioniert ist.

Die US 5 804 228 A sieht vor, den Bereich um die Austrittsöffnung der Düse unmittelbar in der Formnestplatte auszubilden.

Darüber hinaus sind auch aus den Schriften WO 98/12038 A. GB 1 271 543 A, US 3 533 788 A und GB 1 348 276 A Spritzgieißdüsen mit einem langsverschieblichen Düsenmundstück vor.

Es ist ein wichtiges Ziel der Erfindung, diese und weitere Nachteile des Standes der Technik zu überwinden und eine Spritzgießdüse zur Verwendung in einem Spritzgießwerkzeug zu schaffen, die mit einfachen Mitteln koslengünstig aufgebaut ist und einen ebenso einfachen wie raschen Wechsel des Düsenmundstücks und/oder eines darin vorgesehenen Einsatzes ermöglicht. Dabei sollen Beeinträchtigungen der Temperaturverteilung und Auswirkungen der Wärmedehnung weitestgehend ausgeschaltet werden.

Hauptmerkmale der Erfindung sind in Anspruch 1 angegeben. Ausgestaltungen sind Gegenstand der Ansprüche 2 bis 17.

Bei einem Spritzgießwerkzeug, das eine Spritzgießdüse mit einem Düsenkörper enthält, wobei in dem Düsenkörper wenigstens ein Strömungskanal für eine zu verarbeitende Spritzgießmasse ausgebildet ist, der an oder in einem Düsenmundstück mündet und über einen endseitig am Düsenmundstück vorgesehenen Einsatz mit einer von wenigstens einem Formeinsatz gebildeten Formkavität des Spritzgießwerkzeugs strömungsverbunden ist, wobei das in dem Düsenkörper angeordnete Düsenmundstück längsverschieblich ausgebildet und während des Betriebes der Spritzgießdüse zwischen dem Düsenkörper und dem Formeinsatz eingeklemmt ist, wobei das Düsenmundstück und der Einsatz einstückig und aus demselben Material gefertigt sind und wobei zwischen dem Einsatz und dem Formeinsatz eine Stützbuchse angeordnet ist, sieht die Erfindung vor, dass die Stützbuchse die Angussöffnung und einen Teil der Formkavität bildet, dass zwischen dem Düsenkörper und der Stützbuchse ein Stützring angeordnet ist und dass der Stützring mit einer Ringrippe radial in die Formeinsätze eingepasst ist.

Durch den längsverschieblichen Sitz ist es, möglich, das Düsenmundstücks und/oder den darin eingebrachten Einsatz jederzeit rasch und bequem ausbauen zu können. Werkzeuge oder sonstige Hilfsmittel sind nicht mehr erforderlich, Dennoch ist das Düsenmundstück bzw. der Einsatz während des Betriebes der Spritzgießdüse zuverlässig gesichert, nämlich zwischen der Düse und den Formeinsälzen eingeklemmt. Zusätzliche Maßnahmen oder Hilfsmittel zur Befestigung des Düsenmundstücks bzw. des Einsatzes sind nicht erforderlich. Die Spritzgießdüse kann mehrfach wiederverwendet werden.

Ein weiterer wichtiger Vorteil besteht darin, daß die Umrüstzeiten für das Auswechseln des Düsenmundstücks und/oder des darin längsverschieblich geführten Einsatzes auf ein Minimum reduziert werden, was sich günstig auf die Werkzeugkosten auswirkt. Das Gleiche gilt im Falle einer Reparatur.

Von Vorteil ist ferner, daß man den Einsatz jederzeit rasch und bequem durch eine andere Bau- oder Ausführungsform austauschen kann, beispielsweise wenn anstelle wenn der Durchmesser des Angußpunktes verändert werden soll.

Die erfindungsgemäße Spritzgießdüse kann eine Heißkanaldüse oder eine Kaltkanaldüse sein.

Der an dem Einsatz ausgebildete Flansch bildet eine zuverlässige Anlagefläche für den Einsatz sowohl am Düsenmundstück als auch an dem Formeinsatz. Zudem erreicht man eine gute thermische Trennung zwischen der Spritzgießdüse und dem Werkzeug. Zum anderen kann jedoch der Einsatz nicht vollständig auskühlen, was das Risiko der Ausbildung eines kalten Pfropfens innerhalb des Strömungskanals verringert. Das hoch wärmeleitfähige Düsenmundstück hingegen sorgt für eine optimale Temperaturverteilung bis an die Formeinsätze heran.

Der Flansch des Einsatzes sorgt ferner für eine konkrete Bezugsfläche, so daß die Position des Einsatzes und damit der Abstand zwischen dem Düsenmundstück und dem Formeinsatz sehr genau eingestellt werden kann. Der Einsatz selbst zentriert den Düsenkörper gegenüber den Formeinsätzen, wobei die Angußöffnung vorzugsweise in dem Einsatz ausgebildet ist. Dieser bildet ferner einen Teil der Formnestwandung, so daß ein kaum sichtbarer Angußpunkt entsteht.

Weitere Merkmale. Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine Seitenansicht einer nicht zur Erfindung gehörenden Spritzgießdüse in Form einer Nadelverschlußdüse, teilweise im Schnitt.
- Fig. 2: eine Ausschnittsvergrößerung der NadelversChlußdüse von Fig. 1,
- Fig. 3a bis 3c: die Verschlußnadel der Nadelverschlußdüse von Fig. 1 in unterschied- lichen Positionen.
- Fig. 4: eine vergrößerte Ansicht des Unlerteils einer anderen, ebenfalls nicht zur Erfindung gehörenden Ausführungsform einer Nadelverschlußdüse, teilweise im Schnitt.
- Fig. 5: eine Ansicht ähnlich Fig. 4, jedoch von einer hierzu abgewandelten nicht zur Erfindung gehörenden Bauform,
- Fig. 6: eine nicht zur Erfindung gehörende Spritzgießdüse mit einem offenen Anguß,
- Fig. 7: die Spritzgießdüse von Fig. 6 in einer abgewandelten Bauform entsprechend der Erfindung,
- Fig. 8: eine nicht zur Erfindung gehörende Spritzgießdüse mit einer Düsenspitze und
- Fig. 9: die Spritzgießdüse von Fig. 8 in einer abgewandelten Bauform entsprechend der Erfindung.

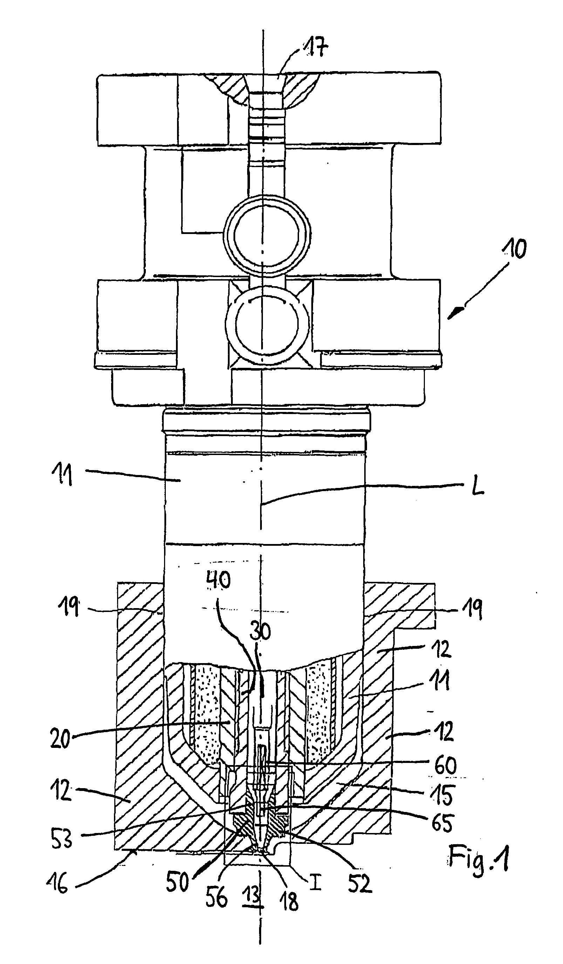

Die in Fig. 1 allgemein mit 10 bezeichnete Spritzgießdüse ist als Nadelverschlußdüse ausgebildet und Bestandteil eines (nicht weiter dargestellten) Spritzgießwerkzeugs. Sie hat in einem Gehäuse 11 einen bevorzugt außenbeheizten Düsenkörper 20, in dem konzentrisch zu einer Längsachse L ein Strömungskanal 30 ausgebildet ist. Durch den Strömungskanal 30 wird eine zu verarbeitende Schmelze, beispielsweise eine Metall-, Silikon- oder Kunststoffschmelze, von einer Material-Zuführöffnung 17 einem (nicht näher gezeigten) Formnest zugeführt. Letzteres ist zwischen Formeinsätzen 12, 13 ausgebildet, die an (nicht dargestellten) Werkzeugplatten befestigt sind.

In den Düsenkörper 20 ist von unten ein Düsenmundstück 40 aus einem hoch wärmeleitfähigen Material eingesetzt, vorzugsweise eingeschraubt, welches den Schmelzekanal 30 nach unten fortsetzt. Das Düsenmundstück 40, der Düsenkörper 20, das Gehäuse 11 und die Formeinsätze 12 begrenzen einen Luftspalt 15, der die Nadelverschlußdüse 10 und die Formeinsätze 12 thermisch voneinander trennt. Oberhalb des Luftspalts 15 wird das Gehäuse 11 der Nadelverschlußdüse 10 von den Formeinsätzen 12 aufgenommen, wobei eine (nicht näher bezeichnete) Berührungsfläche eine Vorzentrierung 19 bilden kann.

Zwischen dem Düsenmundstück 40 und den Formeinsätzen 12 ist axial längsverschieblich ein Einsatz 50 aus einem verschleißfesten Material angeordnet, der die Nadelverschlußdüse 10 gegenüber den Formeinsätzen 12 zentriert und - ebenso wie der Luftspalt 15 - zwischen dem Düsenmundstück 40 und den Formeinsätzen 12 eine thermische Trennung bewirkt, d.h. die fließfähige Schmelze wird durch das hoch wärmeleitfähige Düsenmundstück 40 bis an das Formnest heran auf einer konstant hohen Temperatur gehalten. Gleichzeitig verhindert der Zentrierkörper 50, daß sich die gekühlten Formeinsätze 12 erwärmen.

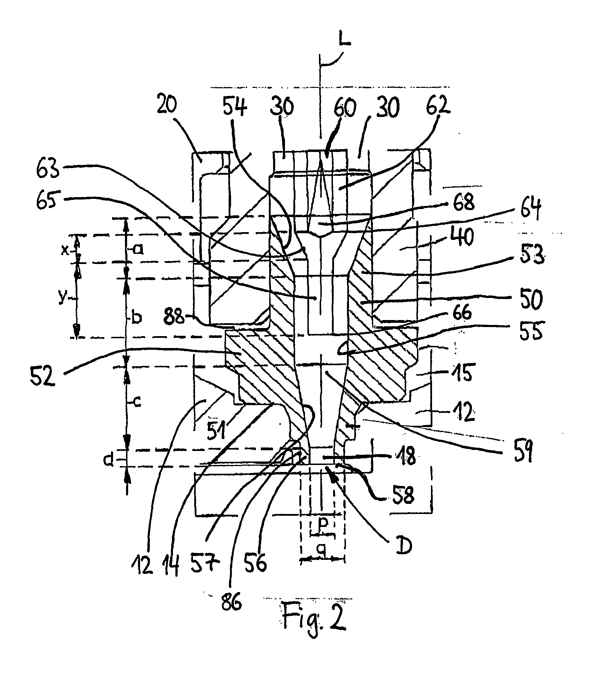

In Fig. 2 ist der Ausschnitt I von Fig. 1 vergrößert dargestellt. Man erkennt, daß der Zentrierkörper 50 insgesamt rotationssymmetrisch zur Längsachse L ausgebildet ist. Er hat einen Flansch 52 sowie einen schmalen zylindrischen Halsabschnitt 53. Dieser ist von unten in den Schmelzekanal 30 bzw. in das Düsenmundstück 40 eingesetzt und längsverschieblich darin geführt.

An seinem dem Formnest zugewandten Ende weist der Zentrierkörper 50 einen ebenfalls zylindrischen Endteil 56 auf, der koaxial zur Längsachse L eine Angußöffnung 18 bildet und gleichfalls längsverschieblich in einen zylindrischen Sitz 86 eingreift. Dieser von den Formeinsätzen 12 geformte Zentriersitz 86 liegt koaxial zur Angußöffnung 18 und kann in einem oberen Abschnitt stufenförmig und/oder konisch ausgebildet sein, so daß der Zentrierkörper 50 mit seinem Endteil 56 bei der Montage stets problemlos in dem Sitz 86 aufgenommen und die Nadelverschlußdüse 10 bei der Montage stets zuverlässig zentriert wird.

Der Außendurchmesser des Endteils 56 ist den Formeinsätzen 12 eng formangepaßt, so daß die Schmelze nicht in die Luftkammer 15 gelangen kann. Dennoch ist eine Längsbewegung des Zentrierkörpers 50 in dem Sitz 86 möglich, um gegebenenfalls thermisch bedingte Längenänderungen der Nadelverschlußdüse 10 mit ausgleichen zu können. Das gleiche gilt für den Halsabschnitt 53. Auch dessen Außendurchmesser ist dem Innendurchmesser des Düsenmundstücks 40 eng formangepaßt, damit zum einen die Längsverschieblichkeit gewährleistet ist und zum anderen eine dichte Verbindung entsteht.

Die beispielsweise flach ausgebildete Stirnfläche 58 des Endteils 56 begrenzt einen Teil des Formnests, wobei die Stirnfläche 58 und die (nicht bezeichnete) Formnestwandung im wesentlichen bündig verlaufen, so daß der Angußpunkt auf dem herzustellenden Produkt nicht sichtbar ist.

Der Strömungskanal 30 der Nadelverschlußdüse 10 wird durch den Zentrierkörper 50 hindurch fortgesetzt. Dieser bildet hierzu einen Durchgang 59, der in der Angußöffnung 18 endet, so daß die Schmelze aufgrund der zentrischen Ausrichtung der Heißkanaldüse 10 stets ungehindert in das Formnest einfließen kann.

Zum Öffnen und Schließen der Angußöffnung 18 ist eine axial verschiebbare Verschlußnadel 60 vorgesehen, die den Schmelzekanal 30 und das Düsenmundstück 40 längsverschieblich durchsetzt und mittels eines (nicht dargestellten) pneumatischen Antriebs von einer Öffnungsstellung in eine Schließstellung gebracht werden kann. Die zumindest abschnittsweise zylindrisch ausgebildete und entlang der Längsachse L im Durchmesser mehrfach abgestufte Verschlußnadel 60 weist endseitig einen Verschlußteil 65 auf, der in Schließstellung durch den Endteil 56 des Zentrierkörpers 50 hindurch in die Angußöffnung 18 eingreift, die zugleich einen zylindrischen Dichtsitz D für die Verschlußnadel 60 bildet.

Die Übergänge von den im Durchmesser größeren Nadelabschnitten zu den im Durchmesser kleineren Abschnitten können konisch oder gerundet verlaufen, wobei zwischen einem Nadelabschnitt 62 und dem daran anschließenden Verschlußteil 65 eine Anlaufkante 64 ausgebildet ist, deren Durchmesser größer ist als der Durchmesser der endseitigen Dichtkante 66 des Verschlußteils 65 der Verschlußnadel 60.

Die Anlaufkante 64 dient dazu, die Verschlußnadel 60 im Falle einer Auslenkung aus ihrer konzentrischen Lage im Schmelzekanal 30 mit Hilfe des Zentrierkörpers 50 zu zentrieren, damit der empfindliche Verschlußteil 65 nicht beschädigt und die Angußöffnung 18 stets druckdicht verschlossen wird. Hierzu ist im Halsabschnitt 53 des Zentrierkörpers 50 ein erster Einlaufkonus 54 vorgesehen, der konzentrisch zur Längsachse L in einen zylindrischen Führungsabschnitt 55 übergeht, dessen Innendurchmesser geringfügig größer ist als der Außendurchmesser des Nadelabschnitts 62 der Verschlußnadel 60. Ein vor der Angußöffnung 18 ausgebildeter zweiter Konus 57 im Zentrierkörper 50 reduziert den Innendurchmesser des Führungsabschnitts 55 auf den Durchmesser des Verschlußteils 65 der Verschlußnadel 60.

Im Betrieb wird der Nadelverschlußdüse 10 über die Material-Zuführöffnung 17 fließfähiges Material zugeführt. Dieses strömt durch den Strömungskanal 30, das Düsenmundstück 40, den Durchgang 59 und die Angußöffnung 18 hindurch in das Formnest. Ein Bewegungsspalt 88, beispielsweise zwischen dem Düsenmundstück 40 und dem Einsatz 50, ist so bemessen, daß sich der Düsenkörper 20 und das Düsenmundstück 40 bis zum Erreichen der Betriebstemperatur ungehindert ausdehnen können. Ist die Betriebstemperatur erreicht, wird der Einsatz 50 über das Düsenmundstück 40 zwischen dem Düsenkörper 20 und den Formeinsätzen 12 fest eingeklemmt, wobei die Unterseite des Flansches 52, der von der sichtbaren Verbreiterung des Einsatzes 50 gebildet wird, eine untere Berührungsfläche 51 bildet, die auf einer Stufe 14 der Formeinsätze flach zur Anlage kommt. Die (nicht näher bezeichnete) Höhe des Endteils 56 des Einsatzes 50 ist dabei so bemessen, daß sich die von der Stirnfläche 58 mit gebildete Formnestgrenze stets bündig ist. Die den Spalt 88 begrenzende Oberseite des Flansches 52 liegt formschlüssig an der unteren Stirnfläche des Düsenmundstücks 40 an, so daß der Flansch 50 stets lagesicher gehalten ist.

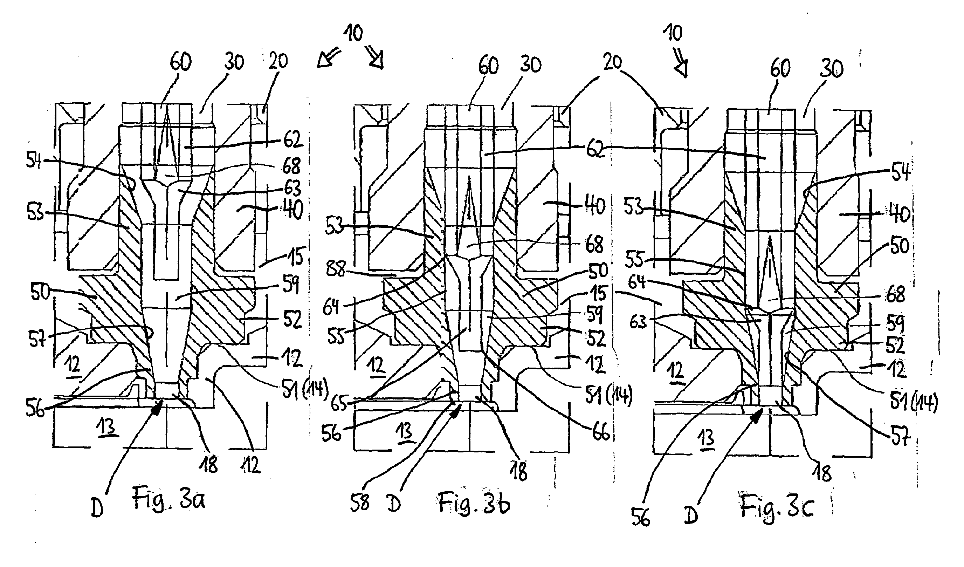

Fährt die Verschlußnadel 60 - wie in den Fig. 3a bis 3c dargestellt - von der Öffnungsstellung in ihre Schließstellung, so wird sie von der Anlaufkante 64 und dem ersten Einlaufkonus 54 automatisch konzentrisch zur Längsachse L ausgerichtet, wobei der Nadelabschnitt 62 in dem Führungsabschnitt 55 des Zentrierkörpers 50 lagestabil weitergeführt wird, bis der Verschlußteil 65 in den Dichtsitz D eingebracht ist (Fig. 3c). Die empfindliche Dichtkante 66 der Verschlußnadel 60 kann dabei weder an dem Düsenmundstück 40 noch an dem Zentrierkörper 50 anschlagen, weil die Länge x+y von der Anlaufkante 64 bis zur Dichtkante 66 kleiner ist als die Länge b+c des Führungsabschnitts 55 und des zweiten Konus 57. Die Berührung der Anlaufkante 64 mit dem Einlaufkonus 54 ist unproblematisch, da die bevorzugt leicht abgerundete Anlaufkante 66 der Verschlußnadel 60 keine Dichtfunktion hat und der Zentrierkörper 50 bevorzugt aus verschleißfestem Material besteht.

Damit sich während des Schließvorgangs der Verschlußnadel 60 kein unerwünschter Gegendruck innerhalb der Schmelze aufbaut, kann man den Einlaufkonus 54 im Zentrierkörper 50 mit (nicht näher dargestellten) Rippen, Axialstegen o.dgl. versehen, welche die Verschlußnadel 60 konzentrisch gleitbar umschließen. Ergänzend oder alternativ kann man die Verschlußnadel 60 - wie in Fig. 2 dargestellt - im Bereich des Nadelabschnitts 62 seitlich mit Auswölbungen oder Vertiefungen 68 versehen, so daß die von der Verschlußnadel 60 verdrängte Schmelze ungehindert in den Schmelzekanal 30 zurückströmen kann. Die Vertiefung 68 ist in der Ausführungsform von Fig. 2 im wesentlichen V-förmig ausgebildet.

Auch die Verschlußnadel 60 schließt - wie Fig. 3c zeigt - mit ihrem Verschlußteil 65 bzw. mit dessen (nicht näher bezeichneten) Stirnfläche bündig mit dem Einsatz 50 ab, so daß ein kaum sichtbarer Angußpunkt auf dem Spritzgußteil entsteht. Bei Bedarf kann der Verschlußteil auch mit einer Prägung versehen sein.

Muß der Einsatz 50 ersetzt werden, beispielsweise weil er seine maximale Standzeit erreicht hat, wird zunächst der Zufluß von flüssigem Kunststoff über die Material-Zuführöffnung 17 unterbrochen. Anschließend wird entweder die Nadelverschlußdüse 10 aus dem Werkzeug entnommen oder die Formeinsätze 12, 13 entfernt. Sobald der Einsatz 50 freiliegt, muß dieser nur noch aus dem Düsenmundstück 40 herausgezogen und durch einen neuen Einsatz 50 ersetzt werden. Hierzu ist kein Werkzeug erforderlich. Der Einsatz 50 läßt sich vielmehr rasch und bequem entnehmen und ebenso rasch und bequem wieder einsetzen. Der Zeit- und Arbeitsaufwand für den Wechsel ist minimal.

Mit dem Einsatz 50 läßt sich auch ebenso einfach der Durchmesser des Dichtsitzes D verändern, beispielsweise wenn eine andere Verschlußnadel 60 oder eine andere Angußöffnung 18 verwendet werden soll. Weil der Dichtsitz D im Einsatz 50 ausgebildet ist, kann die Verschlußnadel 60 die Düse 10 stets zuverlässig verschließen. Thermisch bedingte Längenänderungen der Düse 10 haben mithin keinen Einfluß auf die Abdichtung.

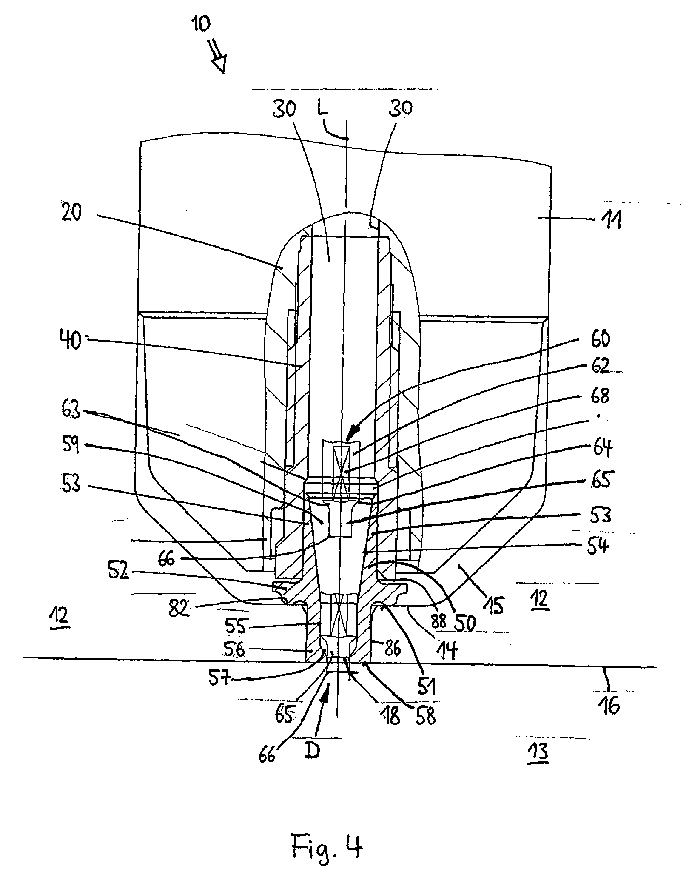

Im Ausführungsbeispiel der Fig. 4 ist die Spritzgießdüse 10 ebenfalls als Nadelverschlußdüse ausgebildet. Sie hat eine axial längsverschiebliche Verschlußnadel 60 mit einem oberen Abschnitt 62 größeren Durchmessers, der sich an einem konischen oder gerundeten Übergang 63 zu einem Verschlußteil 65 verjüngt.

In das untere Ende des Düsenmundstücks 40 ragt ein verschieblicher Einsatz 50, der einen Zentrierkörper sowohl für die Verschlußnadel 60 als auch für die Düse 10 bildet. Der Zentrierkörper 50 hat hierzu einen oberen Halsabschnitt 53, der axial längsverschieblich in das Düsenmundstück 40 einbringbar ist, sowie einen ersten Einlaufkonus 54, der mit der Anlaufkante 64 der Verschlußnadel 60 zusammenwirkt. Ein Endteil 56 greift in einen Zentriersitz 86 in den Formeinsätzen 12 ein und hat einen weiteren Konus 57 für die Verschlußnadel 60.

Zwischen dem Halsabschnitt 53 und dem Endteil 56 hat der Einsatz 50 einen Stützflansch 52, der mit einer axial ausgebildeten ringförmigen Umlaufrippe 82 auf der Stufe 14 der Formeinsätze 12 aufliegt. Die den Bewegungsspalt 88 begrenzende Oberseite des Flanschs 52 ist hingegen glatt ausgebildet. Sie liegt, wenn die Nadelverschlußdüse 10 ihre Betriebstemperatur erreicht hat, flach an dem Düsenmundstück 40 an.

An den Flansch 52 schließt sich koaxial zur Längsachse L der zylindrische Endteil 56 an, der endseitig die Angußöffnung 18 und darin den Dichtsitz D für die Verschlußnadel 60 bildet. In dem Endteil 56 ist ferner ein Führungsabschnitt 55 sowie ein zweiter Konus 57 ausgebildet. Man erkennt in Fig. 4, wie die Verschlußnadel 60 von einer Öffnungsposition in ihre Schließposition gelangt, wobei der Verschlußteil 65 formschlüssig in den Dichtsitz D eingreift und dadurch die Angußöffnung 18 verschließt. Der Verschlußteil 65 kann dabei mit seiner Dichtkante 66 ein Stück weit in das Formnest hineinragen.

In der Ausführungsform von Fig. 4 sind das Düsenmundstück 40 und der Einsatz 50 separat ausgebildet, wobei das fest in dem Düsenkörper 20 montierte Düsenmundstück 40 aus einem hoch wärmeleitfähigen Material und der längsverschiebliche Einsatz 50 aus einem hoch festen Material besteht.

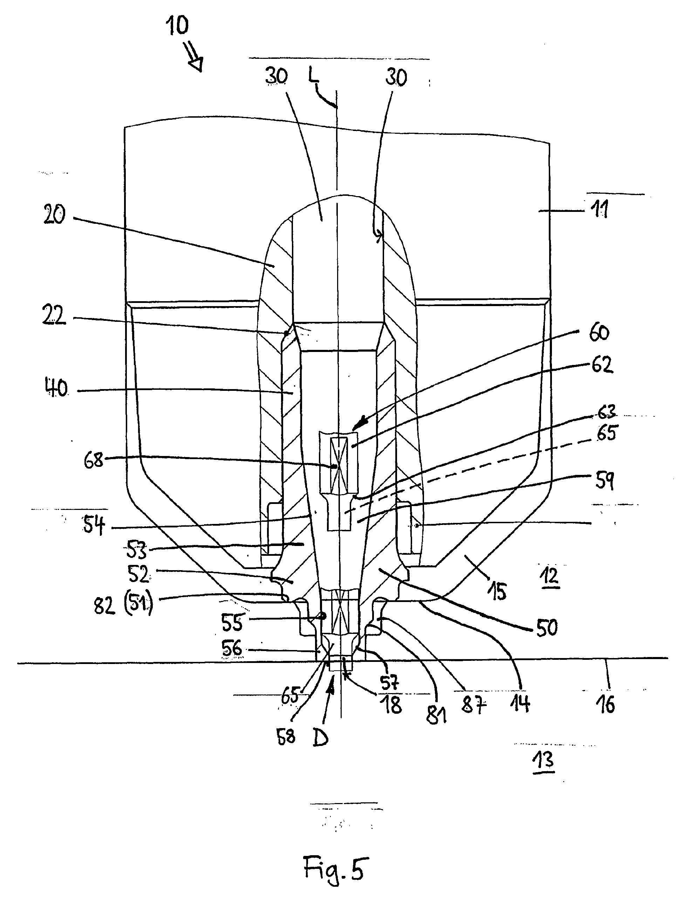

Die in Fig. 5 dargestellte Ausbildung einer Spritzgießdüse 10 sieht demgegenüber vor, daß das Düsenmundstück 40 und der Einsatz 50 einstückig und insgesamt aus einem hoch wärmeleitfähigen Material gefertigt sind. Das Düsenteil 40, 50 wird von unten längsverschieblich in den Düsenkörper 20 eingeschoben, wobei sich der Einsatz 50 weiterhin mit seiner an dem Flansch 52 ausgebildeten Umlaufrippe 82 auf der Stufe 14 der Formeinsätze 12 abstützt. Das Düsenmundstück 40 hingegen findet einen Anschlag 22 innerhalb des Düsenkörpers 20, beispielsweise in Form eines konischen Kragens.

Man erkennt in Fig. 5, daß die an dem Flansch ausgebildete Umlaufrippe 82 eine relativ kleine Kontaktfläche bildet und daß der längsverschieblich in dem Sitz 86 eingreifende Endteil 56 eine reduzierte Wandungsstärke aufweist. Durch diese Maßnahmen wird der Wärmeübergang von dem gut wärmeleitenden Düsenteil 40, 50 auf die Formeinsätze 12 minimal gehalten. Der Endteil 56 des Einsatzes 50 nimmt - weil er im direkten Kontakt mit den Formeinsätzen 12 steht - zwar nahezu deren Temperatur an. Durch die geringe Wandstärke im Endteil 56 und durch einen zwischen dem Endteil 56 und den Formeinsätzen 12 zusätzlich ausgebildeten Luftspalt 87, werden jedoch die Wärmeverluste relativ gering gehalten. Die verringerte Wandstärke im Endteil 56 erreicht man zweckmäßig durch eine am Außenumfang ausgebildete Stufe 81, d.h. durch eine Reduzierung des Außendurchmessers. Man kann allerdings auch die Innenbohrung 59 entsprechend stufenförmig oder kegelförmig ausbilden. Günstig ist es, wenn die Stufe 81 innerhalb des bevorzugt ringförmigen Luftspalts 87 liegt, so daß sich dort ein relativ steiler Temperaturgradient ausbilden kann.

Ein weiterer wichtiger Vorteil dieser Ausführungsform besteht darin, daß der Strömungskanal 30 durch den Düsenteil 40, 50 bis fast an die Angußöffnung 18 heran stets optimal temperiert wird. Dadurch kann sich vor der Angußöffnung 18 kein sogenannter kalter Pfropfen bildet, was sich günstig auf die Produktionsergebnisse auswirkt. Gleichzeitig kann der Düsenteil 40, 50 bei Verschleiß oder im Falle einer Geometrieänderung jederzeit rasch und bequem ausgetauscht werden, indem er einfach aus dem Düsenkörper 20 herausgezogen und durch Einstecken eines Neuen ersetzt wird.

Wie Fig. 5 weiter zeigt, kann auch das Düsenteil 40, 50 einen Einlaufkonus 54 für die Verschlußnadel 60. Er geht im Bereich des Endteils 56 des Einsatzes 50 in den Führungsabschnitt 55 über, der an einem zweiten Konus 57 endet. Dieser mündet unmittelbar in die Angußöffnung 18.

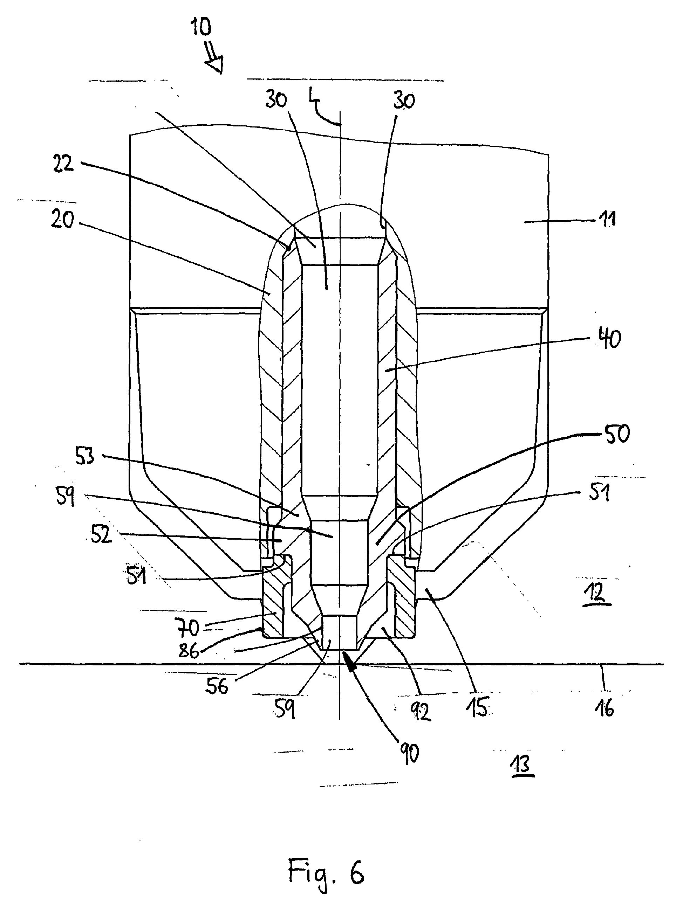

Fig. 6 zeigt eine Spritzgießdüse 10 ohne Verschlußnadel 60 mit einem offenen Anguß 90, der endseitig von dem Endteil 56 des Einsatzes 50 gebildet wird. Dieser ist auch hier einstückig mit dem Düsenmundstück 40 und mit diesem längsverschieblich von unten in den Düsenkörper 20 eingesetzt. Der Flansch 52 des Einsatzes 50 ruht hierbei mit seiner ebenen Berührungsfläche 51 auf einer zylindrischen Stützbuchse 70 aus einem schlecht wärmeleitenden Material. Diese ist die konzentrisch zur Längsachse L ausgebildet und längsverschieblich in den Sitz 86 der Formeinsätze 12 eingesetzt.

Der Endteil 56 des Einsatzes 50 ist an seinem Außenumfang konisch zugespitzt, um an eine gleichfalls konisch gestaltete Angußöffnung 18 dicht heranfahren zu können. Auf diese Weise wird der direkte Kontakt zwischen der zu verarbeitenden Schmelze und den Formeinsätzen 12 minimiert. Ein zwischen der Stützbuchse 70 dem Düsenteil 40, 50 und den Formeinsätzen 12 ausgebildeter Luftspalt 92 sorgt für eine thermische Trennung zwischen der Spritzgießdüse 10 und dem Werkzeug 12, 13.

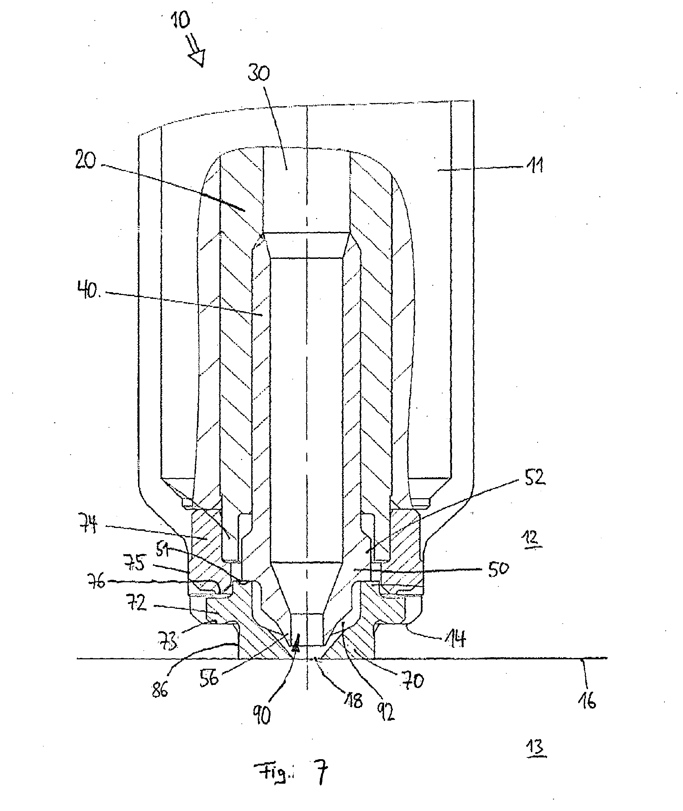

Eine abgewandelte Bauform zeigt Fig. 7. Hier bildet die in dem Sitz 86 längsverschieblich angeordnete Stützbuchse 70 die Angußöffnung 18 und mithin einen Teil der Formnestwandung. Sie hat koaxial zur Längsachse L einen Flanschrand 72, der sich mit einer axial ausgebildeten Umlaufrippe 73 auf der Stufe 14 der Formeinsätze 12 abstützt. Darüber hinaus ist zwischen dem Düsenkörper 20 und der Stützbuchse 70 ein weiterer Stützring 74 angeordnet, der mit einer Ringrippe 75 radial in die Formeinsätze 72 eingepaßt ist und der sich bei Erreichen der Betriebstemperatur mit einer Axialrippe 76 auf der Stützbuchse 70 abstützt.

Auch hier bilden der längsverschieblich in den Düsenkörper 20 eingesetzte Düsenteil 40, 50 und die längsverschieblich in den Formeinsätzen 12 geführte Stützbuchse 70 ein Stecksystem, das stets einen optimalen Längenausgleich gewährleistet und sich jederzeit ohne Werkzeugeinsatz auswechseln oder ersetzen läßt, indem die Bauteile 40, 50, 70 aus ihren Halterungen einfach herausgezogen und durch Einstecken neuer Bauteile ersetzt werden. Im Betrieb werden der Düsenteil 40, 50, die Stützbuchse 70 und der Stützring 74 zwischen dem Düsenkörper 20 und den Formeinsätzen 12 eingeklemmt, so daß alle Teile zuverlässig gesichert sind. Gesonderte oder zusätzliche Befestigungselemente sind nicht erforderlich.

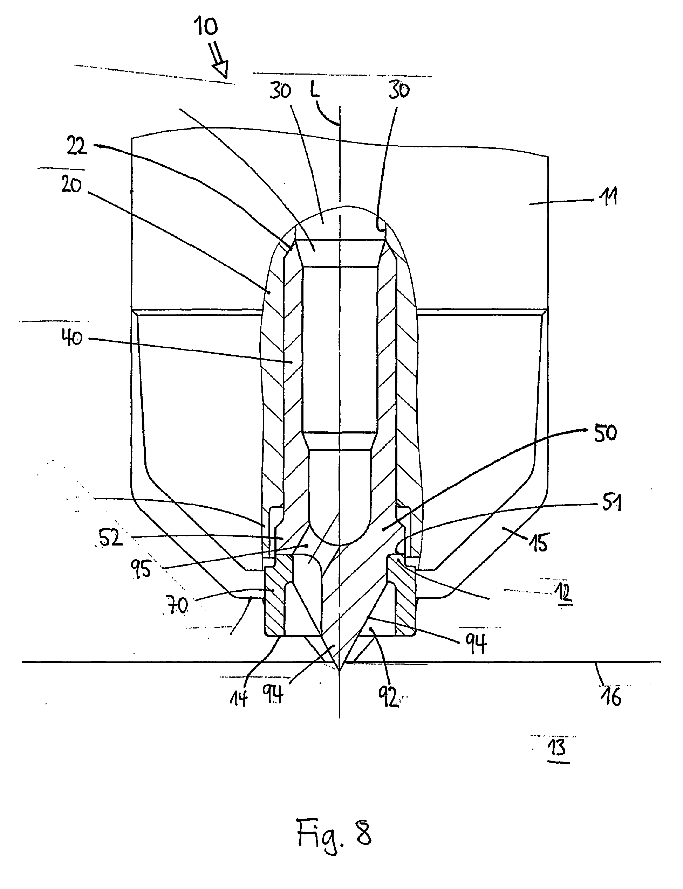

In der Ausführungsform von Fig. 8 bildet der Einsatz 50 bzw. der einstückige Düsenteil 40, 50 endseitig eine insgesamt konische Düsenspitze 94, die mit z.B. drei umfangsverteilten Auslaufbohrungen 95 versehen ist. Letztere verbinden den Schmelzekanal 30 mit der Angußöffnung 18, die von den Formeinsäzten 12 gebildet wird. Auch hier stützt sich der zusammen mit dem Düsenmundstück 40 längsverschieblich in den Düsenkörper 20 eingesetzte Einsatz 50 mit seinem Flansch 52 auf einer schlecht wärmeleitenden Stützbuchse 70 ab, die zur Düsenspitze 94 und den Formeinsätzen hin einen Luftspalt 92 begrenzt. Dieser verbessert die thermische Trennung zwischen Düse 10 und Werkzeug 12, 13.

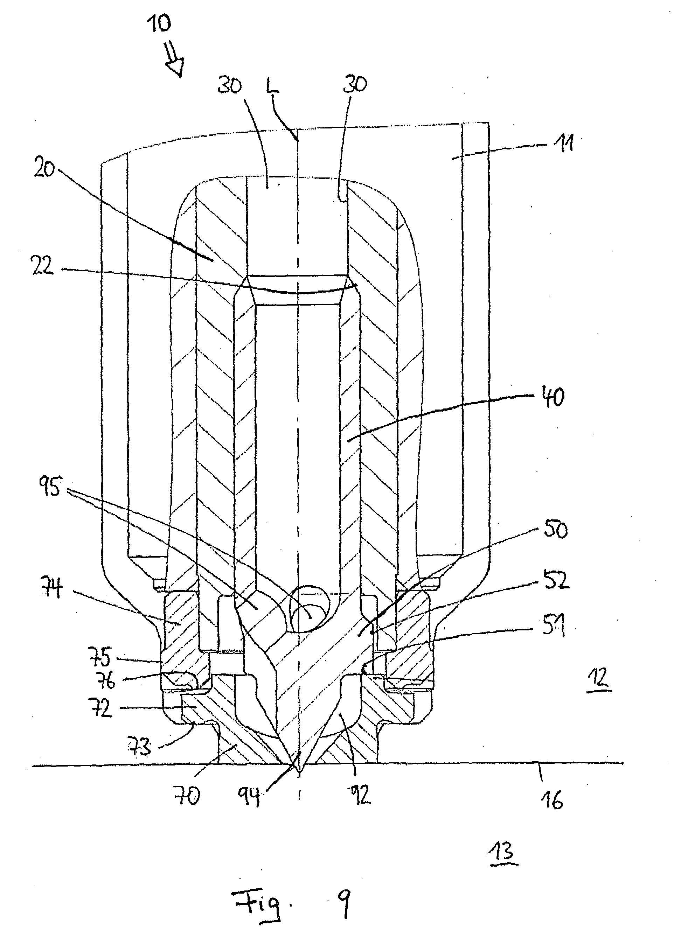

Die Bauform von Fig. 9 ähnelt allgemein derjenigen von Fig. 7, nur daß der Einsatz 50 bzw. das Düsenteil 40, 50 eine Geometrie entsprechend Fig. 8 hat. Die Konusspitze 94 ragt durch die ebenfalls konusförmige Angußöffnung 18 hindurch und damit über die Trennebene 16 hinaus. Die Angußöffnung 18 wird von der Stützbuchse 70 gebildet.

Die Erfindung ist nicht auf eine der vorbeschriebenen Ausführungsformen beschränkt, sondern in vielfältiger Weise abwandelbar. So kann beispielsweise zwischen dem Düsenmundstück 40 und dem Düsenkörper 20, dem Einsatz 50 und dem Düsenmundstück 40 und/oder zwischen dem Einsatz 50 und den Formeinsätzen 12 jeweils eine Verdrehsicherung vorgesehen sein, um den einzelnen Bauteilen eine Vorzugsrichtung zu geben. Auch kann der mit der Düsenspitze 94 ausgebildete Einsatz 50 für eine seitliche (mehrfach) Anspritzung ausgebildet sein.

Der Dichtsitz D für die Verschlußnadel 60 im Einsatz 50 muß nicht zwingend zylindrisch ausgebildet sein. Er kann beispielsweise auch konisch sein, um eine ebenfalls im Endbereich 65 konisch ausgebildete Verschlußnadel 60 aufnehmen zu können. Der zylindrische Führungsabschnitt 55 fällt in diesem Fall weg, weil der Durchgang 59 insgesamt konisch ausgebildet ist. Wichtig ist jedoch auch hier, daß der Dichtsitz D und auch die Angußöffnung 18 weiterhin im Einsatz 50 bzw. in dessen Endteil 56 angeordnet sind, damit diese gegenüber den zu verarbeitenden Werkstoffen empfindlichen, für die Produktqualität jedoch sehr wichtigen Bereiche des Werkzeugs jederzeit rasch und beqeum ausgetauscht werden können.

Um die Standzeit der Spritzgießdüse 10 zu erhöhen kann man das mit dem Einsatz 50 einstückige Düsenmundstück 40 bei Bedarf auch aus einem hoch wärmeleitfähgien aber gleichzeitig verschleißfesten Material fertigen.

Man erkennt, daß die Erfindung allgemein eine Düse 10 zur Verwendung in der Spritzgießtechnik vorsieht, die in einem Düsenkörper 20 wenigstens einen Strömungskanal 30 für eine zu verarbeitende Spritzgießmasse hat. Am unteren Ende ist der Kanal 30 durch ein Düsenmundstück 40 und einen Einsatz 50 mit einer von wenigstens einem Formeinsatz 12, 13 gebildeten Formkavität eines Spritzgießwerkzeugs strömungsverbunden. Der Einsatz 50 ist im unteren Ende des Strömungskanals 30 begrenzt längsverschieblich in dem Düsenmundstück 40 angeordnet. Er bildet ferner eine Angußöffnung 18. Bei einer Nadelverschlußdüse 10 durchsetzt eine zwischen einer Öffnungs- und einer Schließstellung bewegliche Verschlußnadel 60 den Schmelzekanal 30 sowie den Einsatz 50, der insgesamt einen Zentrierkörper bildet, in dem z.B. ein Einlaufkonus 54 den eigentlichen Verschlußteil 65 der Nadel 60 zentriert. Das aus hochwärmeleitendem Material bestehende Düsenmundstück 40, das den oberen Teil 53 des Einsatzes 50 umschließt, kann von unten in den Düsenkörper 20 eingeschraubt oder längsverschieblich eingesteckt sein. Oder man bildet das Düsenmundstück 40 und den Einsatz 50 einstückig aus und setzt beide zusammen längsverschieblich in den Düsenkörper 20 ein. Damit das Düsenmundstück 40 und/oder der Einsatz 50 eine festen Halt finden, hat der Einsatz oder Zentrierkörper 50 einen Stützflansch 52.

### Bezugszeichenliste

- D: Dichtsitz
- L: Längsachse

- 10: Spritzgießdüse
- 11: Gehäuse
- 12: Werkzeug / Formeinsatz
- 13: Werkzeug / Formeinsatz
- 14: Stufe
- 15: Luftspalt
- 16: Trennebene
- 17: Material-Zuführöffnung
- 18: Angußöffnung
- 19: Vorzentrierung

- 20: Düsenkörper
- 22: Anschlag
- 30: Strömungs- / Schmelzekanal
- 40: Düsenmundstück

- 50: Einsatz / Zentrierkörper
- 51: Berührungsfläche
- 52: Flansch
- 53: Halsabschnitt
- 54: erster Einlaufkonus
- 55: Führungsabschnitt
- 56: Endteil
- 57: zweiter Konus
- 58: Stirnfläche
- 59: Durchgang

- 60: Verschlußnadel
- 62: Nadelabschnitt
- 63: Übergang
- 64: Anlaufkante
- 65: Verschlußteil
- 66: Dichtkante
- 68: Aussparung / Vertiefung

- 70: Stützbuchse
- 72: Flanschrand
- 73: Umlaufrippe
- 74: Stützring
- 75: Ringrippe
- 76: Axialrippe

- 82: Umlaufrippe
- 86: Sitz
- 87: Luftspalt
- 88: Bewegungsspalt

- 90: offener Anguß
- 92: Luftspalt
- 94: Düsenspitze
- 95: Auslaufbohrung

## Patentansprüche

1. Spritzgießwerkzeug, das eine Spritzgießdüse (10) mit einem Düsenkörper (20) enthält, wobei in dem Düsenkörper (20) wenigstens ein Strömungskanal (30) für eine zu verarbeitende Spritzgießmasse ausgebildete ist, der an oder in einem Düsenmundstück (40) mündet und über einen endseitig am Düsenmundstück (40) vorgesehenen Einsatz (50) mit einer von wenigstens einem Formeinsatz (12, 13) gebildeten Formkavität des Spritzgießwerkzeugs strömungsverbunden ist, wobei das in dem Düsenkörper (20) angeordnete Düsenmundstück (40) längsverschieblich ausgebildet und während des Betriebes der Spritzgießdüse (10) zwischen dem Düsenkörper (20) und dem Formeinsatz (12, 13) eingeklemmt ist, wobei das Düsenmundstück (40) und der Einsatz (50) einstückig und aus demselben Material gefertigt sind und wobei zwischen dem Einsatz (50) und dem Formeinsatz (12, 13) eine Stützbuchse (70) angeordnet ist, **dadurch gekennzeichnet,**
■ **dass** die Stützbuchse (70) die Angussöffnung (18) und einen Teil der Formkavität bildet,
■ **dass** zwischen dem Düsenkörper (20) und der Stützbuchse (70) ein Stützring (74) angeordnet ist und
■ **dass** der Stützring (74) mit einer Ringrippe (75) radial in die Formeinsätze eingepasst ist.

2. Spritzgießdüse nach Anspruch 1, **dadurch gekennzeichnet, dass** die Stützbuchse (70) längsverschieblich in einem Sitz (89) im Formnest (12, 13) angeordnet ist.

3. Spritzgießdüse nach Anspruch 1 oder 2, **dadurch gekennzeichnet, dass** der Einsatz (50) einen Flansch (52) aufweist, der sich axial an der Stützbuchse (70) abstützt, wobei zwischen dem Flansch (52) und der Stützbuchse (70) eine ebene Berührungsfläche (51) ausgebildet ist.

4. Spritzgießdüse nach einem der Ansprüche 1 bis 3. **dadurch gekennzeichnet, dass** die Stützbuchse (70) einen Flanschrand (72) hat, der sich mit einer axial ausgebildeten Umlaufrippe (73) auf der Stufe (14) der Formeinsätze (12) abstützt.

5. Spritzgießdüse nach einem der Ansprüche 1 bis 4, **dadurch gekennzeichnet, dass** die Stützbuchse (70) längsverschieblich ausgebildet und während des Betriebes der Spritzgießdüse (10) zwischen dem Einsatz (50) und den Formeinsätzen (12, 13) eingeklemmt ist.

6. Spritzgießdüse nach einem der Ansprüche 1 bis 5, **dadurch gekennzeichnet, dass** sich der Stützring (74) bei Erreichen der Betriebstemperatur mit einer Axialrippe (76) auf der Stützbuchse (70) abstützt.

7. Spritzgießdüse nach einem der Ansprüche 1 bis 6, **dadurch gekennzeichnet, dass** das Düsenmundstück (40) einen Anschlag (22) im Düsenkörper (20) findet.

8. Spritzgießdüse nach einem der Ansprüche 1 bis 7, **dadurch gekennzeichnet, dass** das Düsenmundstück (40) und der Einsatz (50) einen längsverschieblichen Düsenteil (40, 50) bilden.

9. Spritzgießdüse nach Anspruch 8, **dadurch gekennzeichnet, dass** der längsverschieblich in den Düsenkörper (20) eingesetzte Düsenteil (40, 50) und die längsverschieblich in den Formeinsätzen (12) geführte Stützbuchse (70) ein Stecksystem bilden.

10. Spritzgießdüse nach einem der Ansprüche 1 bis 9, **dadurch gekennzeichnet, dass** der Endteil (56) eine Angußöffnung (18) hat oder bildet.

11. Sprilzgießdüse nach einem der Ansprüche 1 bis 10. **dadurch gekennzeichnet, dass** der Einsatz (50) einen Zentrierkörper für die Spritzgießdüse (10) bildet.

12. Spritzgießdüse nach einem der Ansprüche 1 bis 11, **dadurch gekennzeichnet, dass** das Düsenmundstück (40) und der Einsatz (50) aus einem hoch wärmeleitenden Material gefertigt sind.

13. Spritzgießdüse nach einem der Ansprüche 1 bis 12, **dadurch gekennzeichnet, dass** der Einsatz (50) aus einem verschleißfesten Material gefertigt ist.

14. Spritzgießdüse nach einem der Ansprüche 1 bis 13, **dadurch gekennzeichnet, dass** das Düsenmundstück (40) und der Einsatz (50) einen offenen Anguß (90) bilden.

15. Spritzgießdüse nach einem der Ansprüche 1 bis 14, **dadurch gekennzeichnet, dass** Düsenmundstück (40) und der Einsatz (50) eine kegelförmige Düsenspitze (94) haben oder bilden, die an eine Trennebene (16) heran oder über sie hinausragt.

16. Spritzgießdüse nach einem der Ansprüche 1 bis 15, **dadurch gekennzeichnet, dass** die Stützbuchse (70) einen Luftspalt (92) begrenzt.

17. Spritzgießdüse nach einem der Ansprüche 1 bis 16, **dadurch gekennzeichnet, dass** die Spritzgießdüse (10) eine Heißkanaldüse oder eine Kaltkanaldüse ist.

## Claims

1. Injection moulding tool comprising an injection moulding nozzle (10) with a nozzle body (20), and in this nozzle body (20) being formed at least one flow channel (30) for an injection moulding compound to be worked and which ends at or in an orifice land (40) and is by an insert (50) provided for at the end of the orifice land (40) flow-connected to a mould cavity of the injection moulding tool formed by at least one mould insert (12, 13), with the orifice land (40) arranged in the nozzle body (20) being designed longitudinally moveable and being squeezed between the nozzle body (20) and the mould insert (12, 13) during the operation of the injection moulding nozzle (10), and with the orifice land (40) and the insert (50) being made single-pieced and of the same material, and with a supporting bush (70) being arranged between the insert (50) and the mould insert (12, 13), **characterized in that**
- the supporting bush (70) forms the gating (18) and a part of the mould cavity,
- between the nozzle body (20) and the supporting bush (70) a bearing ring (74) is arranged, and
- the bearing ring (74) is fitted radially into the mould inserts by a gill (75).

2. Injection moulding nozzle according to Claim 1, **characterized in that** the supporting bush (70) is arranged longitudinally moveable in a seat (89) in the mould nest (12, 13).

3. Injection moulding nozzle according to Claim 1, **characterized in that** the insert (50) has a flange (52) that supports itself axially on the supporting bush, and that between the flange 852) and the supporting bush (70) a plain contact surface /51) is formed.

4. Injection mould nozzle according to one of the Claims 1 to 3, **characterized in that** the supporting bush (70) has a flange edge (72) that supports itself by an axially formed circulatory web (73) on the step (14) of the mould inserts (12).

5. Injection mould nozzle according to one of the Claims 1 to 4, **characterized in that** the supporting bush (70) is formed longitudinally moveable and during the operation of the injection mould nozzle (10) squeezed between the insert (50) and the mould inserts (12, 13).

6. Injection mould nozzle according to one of the Claims 1 to 5, **characterized in that** at reaching the working temperature the bearing ring (74) supports itself with an axial web (76) on the supporting bush (70).

7. Injection mould nozzle according to one of the Claims 1 to 6, **characterized in that** the orifice land (40) finds a stop (22) in the nozzle body (20).

8. Injection mould nozzle according to one of the Claims 1 to 7, **characterized in that** the orifice land (40) and the insert (50) for a longitudinally moveable nozzle part (40, 50).

9. Injection mould nozzle according to Claim 8, **characterized in that** the nozzle part (40, 50) inserted longitudinally moveable into the nozzle body (20) and the supporting bush (70) guided longitudinally moveable in the mould inserts (12) form a plug-in system.

10. Injection mould nozzle according to one of the Claims 1 to 9, **characterized in that** the end piece (56) has or forms a gating (18).

11. Injection mould nozzle according to one of the Claims 1 to 10, **characterized in that** the insert (50) forms a centring body for the injection mould nozzle (10).

12. Injection mould nozzle according to one of the Claims 1 to 11, **characterized in that** the orifice land (40) and the insert (50) are made of a high-thermoconducting material.

13. Injection mould nozzle according to one of the Claims 1 to 12, **characterized in that** the insert (50) is made of wear-resisting material.

14. Injection mould nozzle according to one of the Claims 1 to 13, **characterized in that** the orifice land (40) and the insert (50) form an open gate (90).

15. Injection mould nozzle according to one of the Claims 1 to 14, **characterized in that** the orifice land (40) and the insert (50) have or form a conic nozzle tip (94) that extends to the parting plane (16) or projects over t.

16. Injection mould nozzle according to one of the Claims 1 to 15, **characterized in that** the supporting bush (70) limits an air gap (92).

17. Injection mould nozzle according to one of the Claims 1 to 16, **characterized in that** the injection mould nozzle (10) is a hot air passage nozzle or a cold air passage nozzle.

## Revendications

1. Outil de moulage par injection comprenant une buse de moulage par injection (10) avec un corps de buse (20), avec au moins un conduit de passage (30) formé dans ce corps de buse (20) pour traiter une matière à mouler par injection et qui se termine à ou dans un nez de buse (40) et est connecté par passage par une insertion (50) prévue au bout du nez de buse (40) à une cavité de moule de l'outil de moulage par injection qui est formée au moins d'une insertion de moule, avec le nez de buse (40) arrangé dans le corps de buse (20) de manière longitudinalement amovible, et serré entre le corps de buse (20) et l'insertion de moule (12, 13) pendant l'action de la buse de moulage par injection (10), le nez de buse (40) et l'insertion (50) sont faits en une seule pièce et de la même matière, et avec une douille de support (70) qui est arrangé entre l'insertion (50) et l'insertion de moule (12, 13), **caractérisé en ce que**
- la douille de support (70) forme l'entrée (18) et une partie de la cavité de moule,
- entre le corps de buse (20) et la douille de support (70) une bague d'appui (74) est arrangée, et
- la bague d'appui (74) est radialement encastrée dans les insertions de moule par une nervure annulaire (75).

2. Buse de moulage par injection selon la Revendication 1, **caractérisée en ce que** la douille de support (70) est arrangée de manière longitudinalement amovible dans un logement (89) dans le nid de moule (12, 13).

3. Buse de moulage par injection selon la Revendication 1 ou 2, **caractérisée en ce que** l'insertion (50) est munie d'une bride (52) qui s'appuie axialement sur la douille de support (70), et qu'une plaine surface de contact (51) s'étend entre la bride (52) et la douille de support (70).

4. Buse de moulage à injection selon une des Revendications 1 à 3, **caractérisée en ce que** la douille de support (70) a un bord de bride (72) qui s'appuie avec une nervure circulaire (73) axialement formée sur le gradin (14) des insertions de moule (12).

5. Buse de moulage à injection selon une des Revendications 1 à 4, **caractérisée en ce que** la douille de support (70) est formée de manière longitudinalement amovible et qui est pendant l'action de la buse de moulage à injection serrée entre l'insertion (50) et les insertions de moule (12, 13).

6. Buse de moulage à injection selon une des Revendications 1 à 5, **caractérisée en ce que**, à l'atteinte de la température de service, la bague d'appui (74) s'appuie avec une nervure axiale (76) sur la douille de support (70).

7. Buse de moulage selon une des revendications 1 à 6, **caractérisée en ce que** le nez de buse (40) trouve un arrêt (22) dans le corps de buse (20).

8. Buse de moulage à injection selon une des Revendications 1 à 7, **caractérisée en ce que** le nez de buse (40) et l'insertion (50) forment une partie de buse longitudinalement amovible (40, 50).

9. Buse de moulage à injection selon la Revendication 8, **caractérisée en ce que** la partie de buse (40, 50) insérée longitudinalement amovible dans le corps de buse (20) et la douille de support (70) guidée de manière longitudinalement amovible dans les insertions de moule (12) forment un système enfichable.

10. Buse de moulage à injection selon une des Revendications 1 à 9, **caractérisée en ce que** la partie de bout (56) a ou forme une entrée (18).

11. Buse de moulage à injection selon une des Revendications 1 à 10, **caractérisée en ce que** l'insertion (50) forme un corps de centrage pour la buse de moulage à injection (10).

12. Buse de moulage à injection selon une des Revendications 1 à 11, **caractérisée en ce que** le nez de buse (40) et l'insertion (50) sont faits d'un matériel à haute conduction thermique.

13. Buse de moulage à injection selon une des Revendications 1 à 12, **caractérisée en ce que** l'insertion (50) est faite d'un matériel résistant à l'usure.

14. Buse de moulage à injection selon une des Revendications 1 à 13, **caractérisée en ce que** le nez de buse (40>) et l'insertion (50) forment une entrée ouverte (90).

15. Buse de moulage à injection selon une des Revendications 1 à 14, **caractérisée en ce que** le nez de buse (40) et l'insertion (50) ont ou forment une pointe de buse conique (94) qui s'aboutit à un plan de joint (16) ou le saillit.

16. Buse de moulage à injection selon une des Revendications 1 à 15, **caractérisée en ce que** la douille de support (70) délimite une fente d'aération (92).

17. Buse de moulage à injection selon une des Revendications 1 à 16, **caractérisée en ce que** la buse de moulage à injection (10) est une buse à canal chauffant ou une buse à canal froid.
